# EUROPEAN PATENT APPLICATION

(11) **EP 4 656 274 A1**
(43) Date of publication of application: **03.12.2025**
(21) Application number: 23922824.0
(22) Date of filing: 25.08.2023
(51) Int. Cl.: B01D 53/14, B01D 53/92, B01D 53/96, C01B 32/50, F02C 6/18

(54) **CO2 RECOVERY DEVICE AND CONTROL METHOD**

(30) Priority: 15.02.2023 JP 2023021459
(71) Applicant: Mitsubishi Heavy Industries, Ltd., Tokyo 100-8332 (JP)
(72) Inventor: NAKAGAWA, Yosuke, Tokyo 100-8332 (JP); KAMADA, Toru, Yokohama-shi, Kanagawa 220-8401 (JP); KONDO, Shigeki, Yokohama-shi, Kanagawa 220-0012 (JP); MIYAMOTO, Osamu, Yokohama-shi, Kanagawa 220-8401 (JP)
(74) Representative: Studio Torta S.p.A.
(86) International application number: PCT/JP2023/030799
(87) International publication number: WO 2024/171490

(57) **Abstract**

Provided is a control device that actuates a blower on the basis of operable conditions. This CO₂ recovery device comprises: a regeneration tower; an absorption tower; a rich line; a flowmeter and a rich valve provided to the rich line; a lean line; a flowmeter and a lean valve provided to the lean line; a bypass line that returns, to the regeneration tower, absorption liquid flowing through the lean line; a bypass valve provided to the bypass line; and a control device that, when starting the circulation operation during normal times, controls opening degrees of the rich valve, the lean valve, and the bypass valve such that the liquid surface height of the absorption liquid in the regeneration tower reaches a prescribed target value.

## Description

### Technical Field

The present disclosure relates to a CO₂ capture unit and a control method. The present disclosure claims priority based on Japanese Patent Application No. 2023-021459, filed in Japan on February 15, 2023, the content of which is incorporated herein by reference.

### Background Art

A plant that applies a CO₂ capture unit to a gas turbine combined cycle (GTCC) and recovers CO₂ from an exhaust gas discharged from the GTCC has been studied. In the CO₂ capture unit, an absorption liquid is circulated between a regenerator and an absorber to recover CO₂ from an exhaust gas. In order to recover CO₂, it is necessary to heat the absorption liquid, and in the case where the CO₂ capture unit is applied to the GTCC, the steam generated in the heat recovery boiler of the GTCC is used for heating the absorption liquid. However, since a sufficient amount of steam cannot be generated for a while after the GTCC is started, the steam is not supplied to the CO₂ capture unit, and as a result, it takes time to start the CO₂ capture unit. In order to shorten the startup time of the CO₂ capture unit, before the steam is supplied from the GTCC, control for suppressing a decrease in the temperature of the absorption liquid in the regenerator by providing an absorption liquid tank and circulating the absorption liquid through each of the absorber and the regenerator has been studied (NPL 1). PTL 1 discloses a configuration in which a plurality of absorption liquid tanks are provided.

### Citation List

### Patent Literature

[PTL 1] Japanese Unexamined Patent Application Publication No. 2022-67389

### Non Patent Literature

[NPL 1] BEIS research paper number 2020/031, "Start-up and Shut-down times of power CCUS facilities", [on line], Department for Business, Energy & Industrial Strategy, [searched on January 16, 2023], Internet https://assets.publishing.service.gov.uk/government/uploads/system/uploads/attachmen t_data/file/929284/AECOM_report_final_version_clean_inc_appendices.pdf>

### Summary of Invention

### Technical Problem

In a case where the steam is supplied from the GTCC and the operation of circulating the absorption liquid through each of the absorber and the regenerator is switched to the operation of circulating the absorption liquid between the absorber and the regenerator at normal times, when the switching is not performed while achieving the balance of the inflow and outflow of the absorption liquid to and from the regenerator, liquid level fluctuation in the regenerator occurs, and the CO₂ capture unit cannot be stably operated. However, a control method for switching to the circulation operation at normal times is not provided.

The present disclosure provides a CO₂ capture unit and a control method capable of solving the above-described problems.

### Solution to Problem

A CO₂ capture unit of the present disclosure includes: an absorber; a regenerator; a rich line for supplying an absorption liquid from the absorber to the regenerator; a first flow meter provided in the rich line; a rich valve that controls a flow rate of the absorption liquid flowing through the rich line; a lean line for supplying the absorption liquid from the regenerator to the absorber; a second flow meter provided in the lean line; a lean valve that controls a flow rate of the absorption liquid flowing through the lean line; a bypass line for returning the absorption liquid flowing through the lean line to the regenerator; a bypass valve that controls a flow rate of the absorption liquid returning through the bypass line; and a control device that controls opening degrees of the rich valve, the lean valve, and the bypass valve such that a liquid level height of the absorption liquid stored in the regenerator becomes a predetermined target value when an operation of circulating the absorption liquid between the absorber and the regenerator through the rich line and the lean line is started.

A control method of the present disclosure is a control method for a CO₂ capture unit including an absorber, a regenerator, a rich line for supplying an absorption liquid from the absorber to the regenerator, a first flow meter provided in the rich line, a rich valve that controls a flow rate of the absorption liquid flowing through the rich line, a lean line for supplying the absorption liquid from the regenerator to the absorber, a second flow meter provided in the lean line, a lean valve that controls a flow rate of the absorption liquid flowing through the lean line, a bypass line for returning the absorption liquid flowing through the lean line to the regenerator, and a bypass valve that controls a flow rate of the absorption liquid returning through the bypass line, the method including: controlling opening degrees of the rich valve, the lean valve, and the bypass valve such that a liquid level height of the absorption liquid stored in the regenerator becomes a predetermined target value when an operation of circulating the absorption liquid between the absorber and the regenerator through the rich line and the lean line is started.

### Advantageous Effects of Invention

According to the CO₂ capture unit and the control method described above, in the CO₂ capture unit, when the operation of circulating the absorption liquid between the absorber and the regenerator is started, the liquid level fluctuation in the regenerator can be suppressed.

### Brief Description of Drawings

Fig. 1 is a diagram showing an example of a CO₂ capture unit according to a first embodiment.
Fig. 2 is a diagram showing an example of a function according to the first embodiment.
Fig. 3 is a flowchart showing an example of control according to the first embodiment.
Fig. 4A is a first diagram showing a configuration example of a main part of the CO₂ capture unit according to the first embodiment.
Fig. 4B is a second diagram showing a configuration example of a main part of the CO₂ capture unit according to the first embodiment.
Fig. 4C is a third diagram showing a configuration example of a main part of the CO₂ capture unit according to the first embodiment.
Fig. 4D is a fourth diagram showing a configuration example of a main part of the CO₂ capture unit according to the first embodiment.
Fig. 5 is a diagram showing an example of a CO₂ capture unit according to a second embodiment.
Fig. 6 is a flowchart showing an example of control according to the second embodiment.
Fig. 7 is a diagram showing an example of a CO₂ capture unit according to a third embodiment.
Fig. 8 is a diagram showing an example of a function according to the third embodiment.
Fig. 9 is a flowchart showing an example of control according to the third embodiment.
Fig. 10 is a diagram showing an example of a CO₂ capture unit according to a fourth embodiment.
Fig. 11 is a diagram showing an example of a hardware configuration of a controller according to each embodiment.

### Description of Embodiments

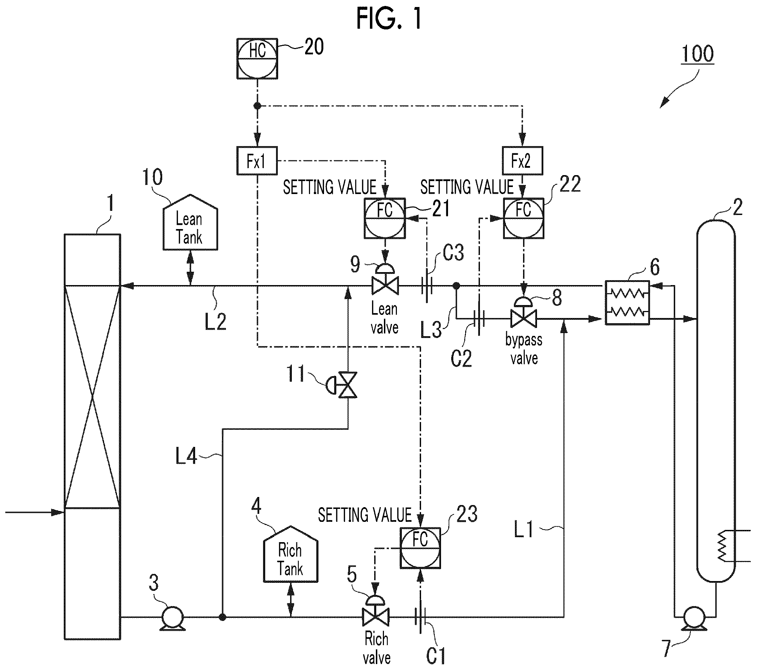

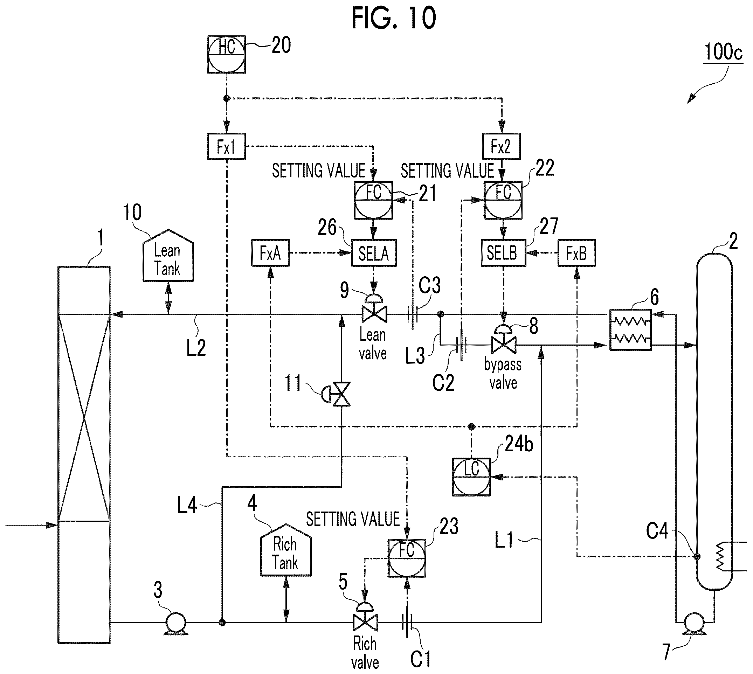

Hereinafter, control when switching the circulation operation of the absorption liquid in the CO₂ capture unit according to the present disclosure will be described with reference to Figs. 1 to 11.

### <First Embodiment>

### (Configuration)

Fig. 1 shows a configuration of a CO₂ capture unit 100 according to a first embodiment. The CO₂ capture unit 100 includes an absorber 1, a regenerator 2, and controllers 20 to 23. The absorber 1 and the regenerator 2 are connected by a rich line L1 for supplying an absorption liquid from the absorber 1 to the regenerator 2 and a lean line L2 for supplying the absorption liquid from the regenerator 2 to the absorber 1. In the rich line L1, a pump 3, a rich valve 5, a flow meter C1, and an absorption liquid heat exchanger 6 are provided in this order from an upstream side toward a downstream side in a flow direction of a rich liquid (the rich liquid indicates an absorption liquid after CO₂ is absorbed in the absorber 1). A rich tank 4 for storing the rich liquid is connected between the pump 3 and the rich valve 5 of the rich line L1. In the lean line L2, a pump 7, an absorption liquid heat exchanger 6, a flow meter C3, and a lean valve 9 are provided from an upstream side toward a downstream side in a flow direction of a lean liquid (the lean liquid indicates an absorption liquid after CO₂ is removed from the regenerator 2). A lean tank 10 for storing the lean liquid is connected between the lean valve 9 and the absorber 1. In the absorption liquid heat exchanger 6, heat exchange is performed between the rich liquid flowing through the rich line L1 and the lean liquid flowing through the lean line L2. One end of a bypass line L3 for returning some of the lean liquid to the regenerator 2 is connected to the lean line L2, and the other end of the bypass line L3 is connected to an upstream side (the upstream side in the flow direction of the rich liquid) of the absorption liquid heat exchanger 6 in the rich line L1. A flow meter C2 and a bypass valve 8 are provided in the bypass line L3 in order from the upstream side in the flow direction of the lean liquid returning to the regenerator 2. A line L4 connecting a connection point between the pump 3 and the rich tank 4 in the rich line L1 and a connection point between the lean valve 9 and the lean tank 10 in the lean line L2 is provided, and the line L4 is provided with a valve 11. The line L4 is a path used in a case where the rich liquid flowing through the rich line L1 is returned to the absorber 1 through the line L4 in a case where the lean liquid to be returned to the absorber 1 is insufficient.

A GTCC (not shown) is provided in front of the CO₂ capture unit 100, and the steam discharged by the GTCC or the like is supplied to a regenerator 2 side of the CO₂ capture unit 100 and is used for heating the absorption liquid. When the GTCC is started, sufficient steam is not supplied until the start-up is completed. At this time, the circulation operation of the absorption liquid between the absorber 1 and the regenerator 2 is stopped. Then, for example, for the absorber 1, the operation is performed such that the rich valve 5 and the lean valve 9 are closed, the pump 3 is driven, the lean liquid is supplied from the lean tank 10 to the absorber 1, the rich liquid is supplied from the absorber 1 to the rich tank 4, the valve 11 is opened as necessary, and the rich liquid flowing out from the absorber 1 is returned to the absorber 1 through the line L4. For the regenerator 2, the operation is performed such that the bypass valve 8 is opened, the pump 7 is driven, and the lean liquid discharged to the lean line L2 is returned to the regenerator 2 through the bypass line L3. Then, when sufficient steam or exhaust gas is supplied from the GTCC, the operation is switched to the normal operation (also referred to as a circulation operation at normal times) in which the absorption liquid is circulated between the absorber 1 and the regenerator 2. The present embodiment relates to the control of switching to the circulation operation at normal times, and realizes stable switching by controlling the various valves 5, 8, and 9 in cooperation with each other by the controllers 20 to 23.

The controller 20 receives a setting value of a flow rate of the absorption liquid circulating through the absorber 1 and the regenerator 2. The setting may be performed by the user or may be performed by the higher-level control device. The controller 20 includes a function Fx1 and a function Fx2. When a setting value of a circulation flow rate is input to the function Fx1, the function Fx1 calculates a target flow rate of the absorption liquid. The target flow rate calculated by the function Fx1 is output to the controller 21 and the controller 23. The controller 21 controls an opening degree of the lean valve 9 such that a flow rate of the lean liquid measured by the flow meter C3 becomes the target flow rate calculated by the function Fx1. The controller 23 controls an opening degree of the rich valve 5 such that a flow rate of the rich liquid measured by the flow meter C1 becomes the target flow rate calculated by the function Fx1. On the other hand, when the setting value of the flow rate is input to the function Fx2, the function Fx2 calculates the target flow rate of the absorption liquid flowing through the bypass line L3 and returning to the regenerator 2. The target flow rate calculated by the function Fx2 is output to the controller 22. The controller 22 controls an opening degree of the bypass valve 8 such that the flow rate of the absorption liquid measured by the flow meter C2 becomes the target flow rate calculated by the function Fx2.

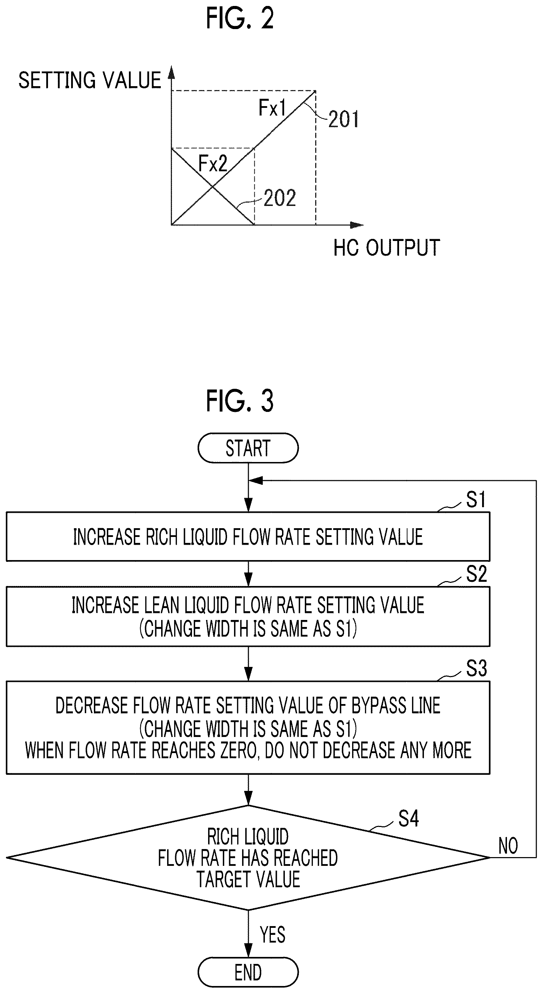

Fig. 2 shows a relationship between values calculated by the function Fx1 and the function Fx2 and the setting value of the circulation flow rate received by the controller 20. The vertical axis (setting value) of the graph in Fig. 2 indicates a value (target flow rate) calculated and output by the function Fx1 and the function Fx2, and the horizontal axis indicates a value (HC output) output by the controller 20 to the function Fx1 and the function Fx2. The HC output is, for example, the same value as a flow rate setting value received from the user or the higher-level control device. As will be described later, when switching to the circulation operation at normal times, the rich valve 5 and the lean valve 9 are gradually opened, and the bypass valve 8 is gradually closed. The HC output on the horizontal axis of the graph in Fig. 2 can also be read as an HC output value with the passage of time after start of the switching. A graph 201 corresponds to the function Fx1, and a graph 202 corresponds to the function Fx2. The setting value of the function Fx1 and the HC output have a positive correlation, and for example, the function Fx1 outputs a setting value having the same magnitude as the input HC output. The setting value of the function Fx2 and the HC output have a negative correlation, and for example, the function Fx2 outputs a setting value of (input HC output × -1).

### (Operation)

Next, the flow of control when switching the circulation of the absorption liquid in the CO₂ capture unit 100 from the operation in which the absorption liquid is circulated through each of the absorber 1 and the regenerator 2 to the circulation operation at normal times will be described with reference to Fig. 3.

The following processes are repeatedly executed until the flow rate of the absorption liquid that circulates through the absorber 1 and the regenerator 2 after the circulation path of the absorption liquid is switched reaches a final target value. First, the final target value of the flow rates of the rich liquid and the lean liquid is set in the controller 20. The controller 20 gradually increases the HC output so that the circulation flow rate of the absorption liquid gradually increases toward the final target value of the flow rate, inputs the HC output to the function Fx1 and the function Fx2, and calculates the flow rate setting values of the rich line L1, the lean line L2, and the bypass line L3. (Alternatively, the controller 20 may be gradually given a larger flow rate target value toward the final target value of the flow rate.) More specifically, the controller 20 calculates the target flow rate of the rich liquid by using the function Fx1, and outputs the result to the controller 23. Accordingly, a rich liquid flow rate setting value is increased compared to before (step S1). The controller 23 controls the opening degree of the rich valve 5 such that the flow rate of the rich liquid becomes a newly set rich liquid flow rate setting value. The controller 20 outputs the target flow rate calculated by the function Fx1 to the controller 21. Accordingly, a lean liquid flow rate setting value is increased compared to before (step S2). The increase width of the lean liquid flow rate setting value is the same as the increase width of the rich liquid flow rate setting value in step S1. The controller 21 controls the opening degree of the lean valve 9 such that the flow rate of the lean liquid becomes a newly set lean liquid flow rate setting value. The controller 20 calculates the target flow rate of the bypass line L3 by using the function Fx2, and outputs the result to the controller 22. Accordingly, the flow rate setting value of the bypass line L3 is decreased compared to before (step S3). The decrease width of the flow rate setting value at this time is the same as the increase width of the flow rate setting value in steps S1 and S2. The controller 22 controls the opening degree of the bypass valve 8 such that the flow rate of the absorption liquid that returns by flowing through the bypass line L3 becomes a newly set flow rate setting value. However, when the opening degree of the bypass valve 8 reaches 0 (fully closed), the process in step S3 is not performed thereafter. Next, the controller 20 determines whether or not the flow rate of the rich liquid has reached the final target value, based on measured values of the flow meters C1 and C3 (step S4). In a case where the flow rate of the rich liquid has reached the final target value (step S4; Yes), the switching process to the circulation operation at normal times is completed. In a case where the flow rate of the rich liquid has not reached the final target value (step S4; No), the processes after step S1 are repeatedly executed. That is, the control to gradually increase the target flow rate of the absorption liquid circulating through the absorber 1 and the regenerator 2 by interlocking the various valves 5, 8, and 9 is continued.

### (Effects)

As described above, according to the present embodiment, when switching to the circulation operation at normal times, by controlling the flow rate of the lean liquid flowing out from the regenerator 2 and the flow rate of the lean liquid returning through the bypass line L3 in accordance with the flow rate of the rich liquid flowing into the regenerator 2, the operation can be performed while maintaining the flow rate at a value equal to or higher than a certain value while achieving the balance of the absorption liquid flowing into and out of the regenerator 2. Since the balance of the absorption liquid flowing into and out of the regenerator 2 is maintained, the liquid level fluctuation of the absorption liquid stored in the regenerator 2 can be suppressed. By controlling the controllers 21 to 23 in cooperation with each other, it is possible to stably control the circulation flow rate without causing interference between the controllers. Since a plurality of flow meters are not installed in one line, the pressure loss caused by the flow meters C1 to C3 can be minimized.

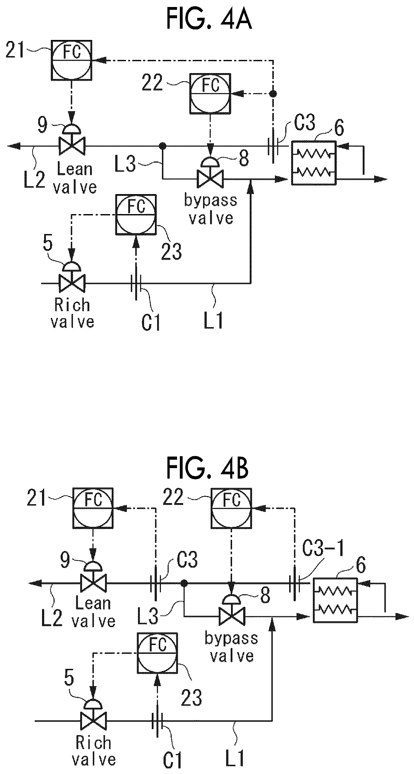

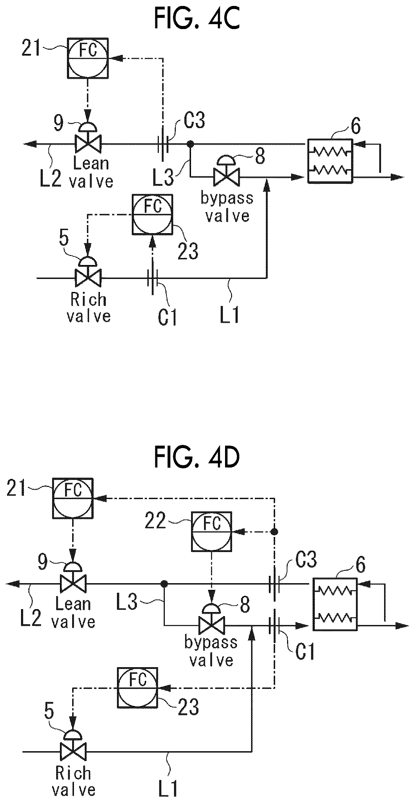

In consideration of the pressure loss and the accuracy of control caused by providing the flow meter, the configuration shown in Fig. 1 is preferable, but the configuration shown in Figs. 4A to 4D may be adopted.

### <Second Embodiment>

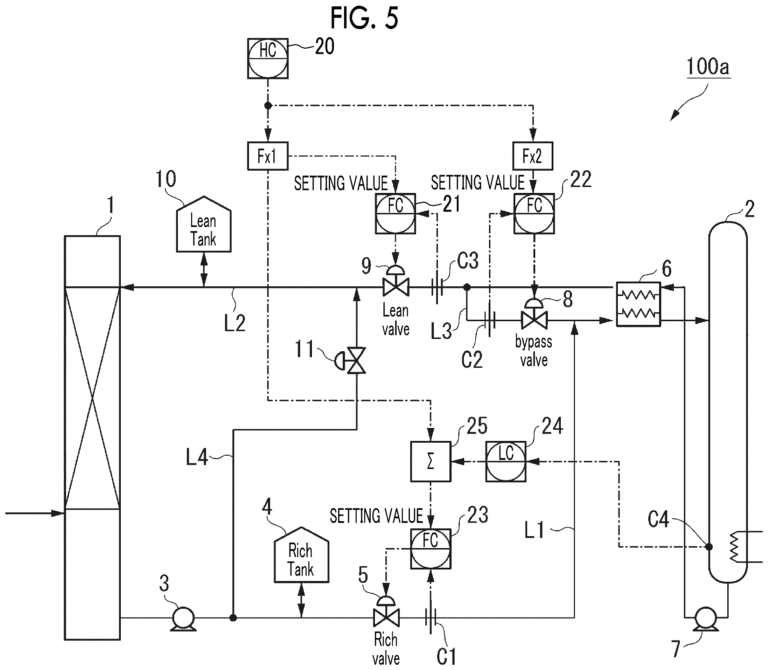

In a second embodiment, a configuration in which the fluctuation in the liquid level height of the regenerator 2 is fed back to the target flow rate is added. As shown in Fig. 5, a CO₂ capture unit 100a according to the second embodiment includes a sensor C4 that detects the height of the liquid level in the regenerator 2, a controller 24 that converts the fluctuation in the liquid level height detected by the sensor C4 into a flow rate control value, and an adder 25, in addition to the configuration shown in Fig. 1. The sensor C4 detects the liquid level height of the regenerator 2 and outputs the detected liquid level height to the controller 24. When the difference between the liquid level height (liquid level) of the absorption liquid measured by the sensor C4 and the target value of the predetermined liquid level height is equal to or higher than a threshold value, the controller 24 calculates the flow rate of the absorption liquid, which causes the difference to approach 0. The controller 24 outputs the calculated flow rate (a correction amount of the flow rate) to the adder 25. The adder 25 adds the correction amount of the flow rate calculated by the controller 24 to the target flow rate calculated by the function Fx1, and outputs the result to the controller 23. The controller 23 controls the opening degree of the rich valve 5 such that the flow rate of the absorption liquid measured by the flow meter C3 becomes the flow rate acquired from the adder 25.

### (Operation)

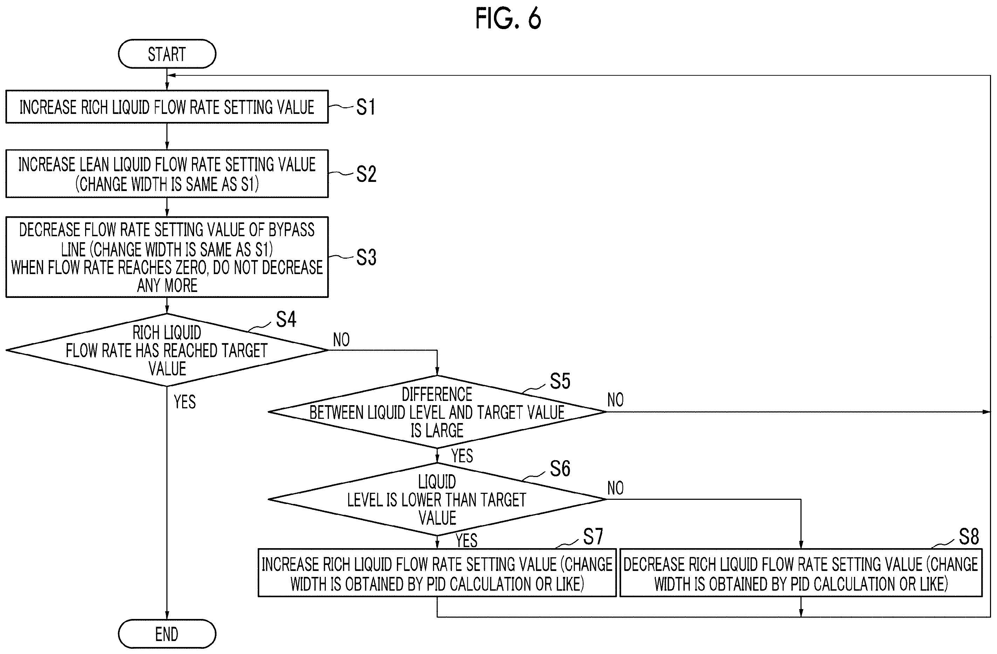

Fig. 6 shows a flow of switching control to the circulation operation at normal times according to the second embodiment. The same processes as in the first embodiment will be briefly described.

The following processes are repeatedly executed until the circulation flow rate reaches the final target value. First, the rich liquid flow rate setting value is increased compared to before (step S1). Next, the lean liquid flow rate setting value is increased compared to before (step S2). Next, the flow rate setting value of the bypass line L3 is decreased compared to before (step S3). Next, the controller 20 determines whether or not the flow rate of the rich liquid has reached the final target value (step S4). In a case where the flow rate of the rich liquid has reached the final target value (step S4; Yes), the switching process to the circulation operation at normal times is completed.

In a case where the flow rate of the rich liquid has not reached the final target value (step S4; No), the controller 24 determines whether or not a difference between the liquid level height (liquid level) of the absorption liquid in the regenerator 2 measured by the sensor C4 and the target value is large (step S5), and in a case where the difference is not large (step S5; No), the processes after step S1 are repeatedly executed. In a case where the difference is large (step S5; Yes), when the liquid level height (liquid level) of the regenerator 2 measured by the sensor C4 is lower than the target value (step S6; Yes), the controller 24 calculates the correction amount of the flow rate for increasing the rich liquid flow rate setting value by PID control or the like so that the liquid level height can be raised. The adder 25 adds the correction amount to the rich liquid flow rate setting value output by the function Fx1 to increase the rich liquid flow rate setting value (step S7). The controller 23 controls the opening degree of the rich valve 5 such that the flow rate of the rich liquid becomes a newly set rich liquid flow rate setting value.

On the other hand, when the liquid level height (liquid level) of the regenerator 2 measured by the sensor C4 is higher than the target value (step S6; No), the controller 24 calculates the correction amount of the flow rate for decreasing the rich liquid flow rate setting value by PID control or the like so that the liquid level height can be lowered. The adder 25 adds the correction amount to the rich liquid flow rate setting value output by the function Fx1 to decrease the rich liquid flow rate setting value (step S8). The controller 23 controls the opening degree of the rich valve 5 such that the flow rate of the rich liquid becomes a newly set rich liquid flow rate setting value.

### (Effects)

As described above, according to the present embodiment, in addition to the effects of the first embodiment, it is possible to appropriately correct a decrease in the amount of CO₂ separated in the regenerator 2 or the fluctuation in the liquid level height due to various disturbances, and the liquid level fluctuation in the regenerator 2 can be suppressed.

In the above description, the correction amount of the flow rate calculated by the controller 23 is reflected in the controller 23, but the correction amount may be reflected in the controller 21. That is, the adder 25 outputs a value obtained by subtracting the correction amount calculated by the controller 24 from the lean liquid flow rate setting value output by the function Fx1 to the controller 21. Accordingly, when the liquid level height of the regenerator 2 measured by the sensor C4 is higher than the target value, the lean liquid flow rate setting value is increased by subtracting the correction amount (in this case, a negative value), and the outflow amount from the regenerator 2 increases, so that the liquid level height is corrected. On the contrary, when the liquid level height of the regenerator 2 measured by the sensor C4 is lower than the target value, the lean liquid flow rate setting value is decreased by subtracting the correction amount, and the outflow amount from the regenerator 2 decreases, so that the liquid level height is corrected.

### <Third Embodiment>

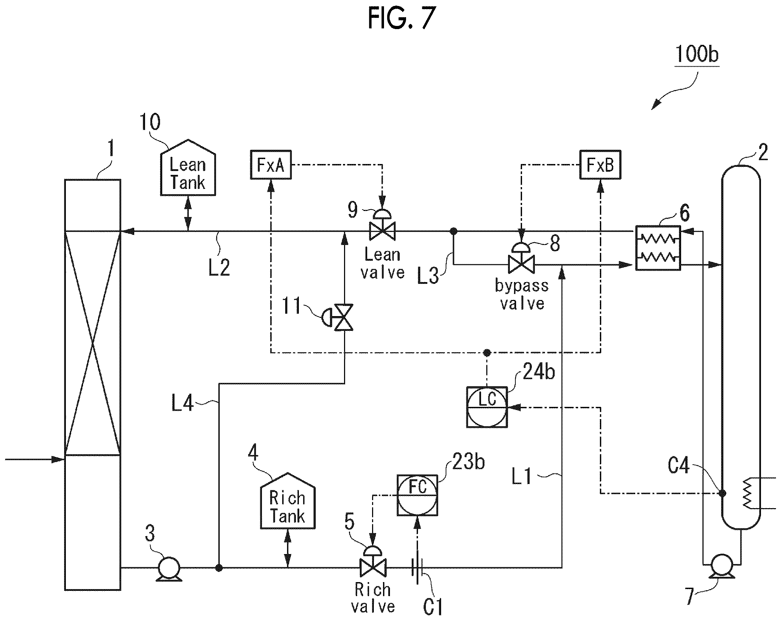

In a third embodiment, a configuration in which the fluctuation in the liquid level height of the regenerator 2 is fed back to the target flow rates of the lean valve 9 and the bypass valve 8 is added. As shown in Fig. 7, a CO₂ capture unit 100b according to the third embodiment is configured to, with respect to the configuration shown in Fig. 1, add a sensor C4 that detects the height of the liquid level in the regenerator 2, remove the flow rate sensors C2 and C3, and include controllers 23b and 24b instead of the controllers 20 to 23. The controller 23b receives a setting value of the target flow rate from the user or the higher-level control device. The controller 23b controls the opening degree of the rich valve 5 such that the flow rate of the rich liquid measured by the flow meter C1 becomes the received setting value of the target flow rate. The sensor C4 detects the liquid level height of the regenerator 2 and outputs the detected liquid level height to the controller 24b. When the difference between the liquid level height (liquid level) of the absorption liquid measured by the sensor C4 and the target value of the predetermined liquid level height is equal to or higher than the threshold value, the controller 24b calculates the target flow rate of the lean liquid and the target flow rate of the absorption liquid returning through the bypass line L3, which causes the difference to approach 0, by **PID** control or the like, and calculates the valve opening degree corresponding to the target flow rate. The controller 24b includes a function FxA and a function FxB. When a target flow rate, which causes the liquid level height measured by the sensor C4 to approach the target value, is input to the function FxA, the function FxA calculates the valve opening degree of the lean valve 9, which causes the liquid level height to approach the target value. The controller 24b opens the lean valve 9 at the valve opening degree calculated by the function FxA. When a target flow rate, which causes the liquid level height measured by the sensor C4 to approach the target value, is input to the function FxB, the function FxB calculates the valve opening degree of the bypass valve 8, which causes the liquid level height to approach the target value. The controller 24b opens the bypass valve 8 at the valve opening degree calculated by the function FxB.

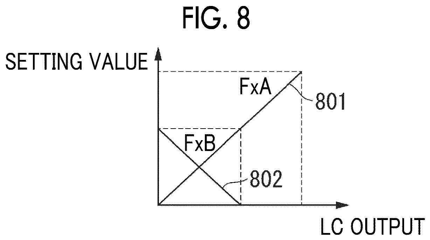

Fig. 8 shows a relationship between the valve opening degree calculated by the function FxA and the function FxB and the target flow rate. The vertical axis (setting value) of the graph in Fig. 8 indicates a value (valve opening degree) calculated and output by the function FxA and the function FxB, and the horizontal axis indicates a target flow rate (LC output) for correcting the liquid level height. A graph 801 corresponds to the function FxA, and a graph 802 corresponds to the function FxB. The setting value of the function FxA and the LC output have a positive correlation, and the setting value of the function FxB and the LC output have a negative correlation. The setting value of the function FxA and the setting value of the function FxB when the same LC output is input have a positive/negative relationship (setting value of function FxA = setting value of function FxB × -1).

### (Operation)

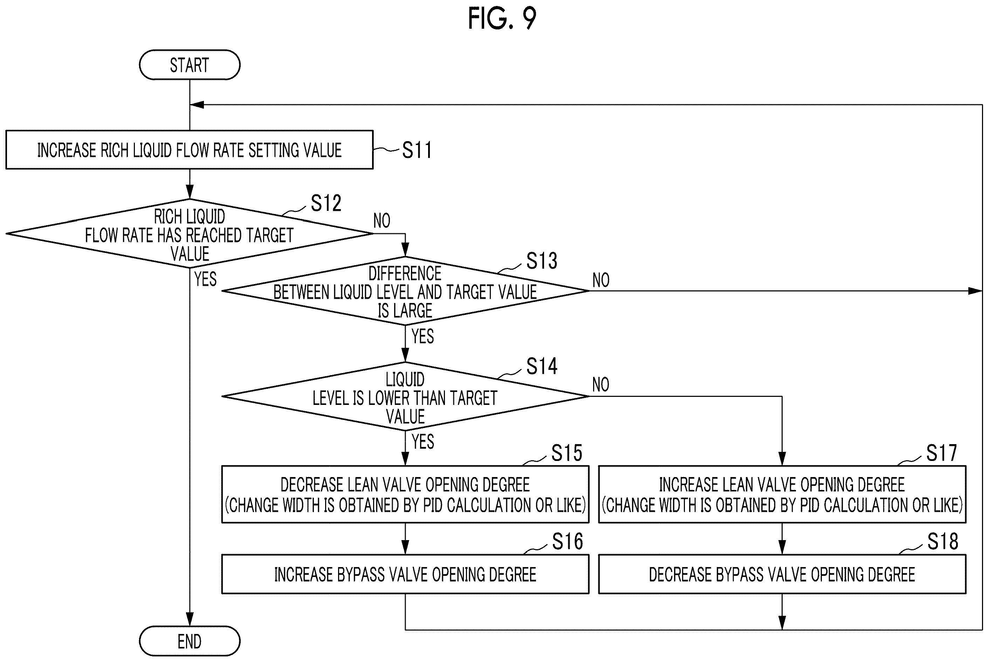

Fig. 9 shows a flow of switching control to the circulation operation at normal times according to the third embodiment. The same processes as in the first embodiment will be briefly described.

The following processes are repeatedly executed until the circulation flow rate reaches the final target value. The target value of the flow rate, which is set to be gradually increased, is periodically given to the controller 23b from the outside until the circulation flow rate reaches the final target value. Accordingly, the rich liquid flow rate setting value is increased compared to before (step S11). Next, the controller 23b determines whether or not the flow rate of the rich liquid has reached the final target value (step S12). In a case where the flow rate of the rich liquid has reached the final target value (step S12; Yes), the switching process to the circulation operation at normal times is completed.

In a case where the flow rate of the rich liquid has not reached the final target value (step S12; No), the controller 24b determines whether or not the difference between the liquid level height (liquid level) of the absorption liquid in the regenerator 2 measured by the sensor C4 and the target value is large (step S13), and in a case where the difference is not large (step S13; No), the processes after step S11 are repeatedly executed. In a case where the difference is large (step S13; Yes), when the liquid level height (liquid level) of the regenerator 2 measured by the sensor C4 is lower than the target value (step S14; Yes), the controller 24b calculates the valve opening degree for decreasing the lean liquid flow rate setting value by PID control or the like so that the liquid level height can be raised. The controller 24b calculates the valve opening degree of the lean valve 9 using the function FxA (decreases the valve opening degree) and controls the lean valve 9 with the calculated valve opening degree (step S15). The controller 24b calculates the valve opening degree for increasing the flow rate of the absorption liquid flowing through the bypass line L3 by PID control or the like so that the liquid level height can be raised. The controller 24b calculates the valve opening degree of the bypass valve 8 using the function FxB (increases the valve opening degree) and controls the bypass valve 8 with the calculated valve opening degree (step S16).

On the other hand, when the liquid level height (liquid level) of the regenerator 2 measured by the sensor C4 is higher than the target value (step S14; No), the controller 24b calculates the valve opening degree for increasing the lean liquid flow rate setting value using the function FxA (increases the valve opening degree) by PID control or the like so that the liquid level height can be lowered, and controls the lean valve 9 with the valve opening degree (step S17). Next, the controller 24b calculates the valve opening degree for decreasing the flow rate of the absorption liquid flowing through the bypass line L3 using the function FxB (decreases the valve opening degree) by PID control or the like so that the liquid level height can be raised, and controls the bypass valve 8 with the valve opening degree (step S18).

### (Effects)

As described above, according to the present embodiment, the opening degrees of the lean valve 9 and the bypass valve 8 are controlled such that the liquid level height of the regenerator 2 can be maintained at the target value while gradually opening the opening degree of the rich valve 5. In this manner, the balance of the absorption liquid flowing into and out of the regenerator 2 is maintained, and the liquid level fluctuation of the regenerator 2 can be suppressed. Since the valve opening degrees of the lean valve 9 and the bypass valve 8 are simultaneously adjusted based on a single control value (LC output in Fig. 8), interference between the valves can be prevented.

In the above description, the target flow rate calculated by the controller 24b is reflected in the controller 21, but the target flow rate may be reflected in the controller 23. That is, the controller 24b calculates the target flow rate of the rich liquid for correcting the liquid level height of the regenerator 2 by feedback control, and outputs the calculated target flow rate to the controller 23b. The controller 23b controls the opening degree of the rich valve 5 based on the target flow rate. In this manner, the flow rate of the absorption liquid circulating through the absorber 1 and the regenerator 2 can be increased to the final target value while maintaining the liquid level height of the regenerator 2 at the target value.

### <Fourth Embodiment>

A CO₂ capture unit 100c according to a fourth embodiment includes a configuration in which the first embodiment and the third embodiment are combined. The configurations of the pipe, the valve, the pump, the heat exchanger, the tank, and the like are the same as those in the first embodiment. Regarding the configuration related to the different controls, the CO₂ capture unit 100c includes the controllers 20, 21, 22, 23, and 24b, selectors 26 and 27, and the sensor C4 that detects the liquid level height of the regenerator 2. The controller 20 receives the setting value of the flow rate from the user or the like, outputs the target flow rate calculated by the function Fx1 to the controller 21 and the controller 23, and outputs the bypass flow rate calculated by the function Fx2 to the controller 22. The controller 23 controls the opening degree of the rich valve 5 based on the target flow rate acquired from the controller 20 and the measured value of the flow meter C1. The controller 21 calculates the valve opening degree of the lean valve 9 based on the target flow rate acquired from the controller 20 and the measured value of the flow meter C3, and outputs the calculated valve opening degree to the selector 26. The controller 22 calculates the valve opening degree of the bypass valve 8 based on the target flow rate acquired from the controller 20 and the measured value of the flow meter C2, and outputs the calculated valve opening degree to the selector 27. The controller 24b acquires the liquid level height of the regenerator 2 detected by the sensor C4, calculates the valve opening degree of the lean valve 9 for correcting the liquid level height by using the function FxA, and outputs the calculated valve opening degree to the selector 26. The controller 24b acquires the liquid level height of the regenerator 2 detected by the sensor C4, calculates the valve opening degree of the bypass valve 8 for correcting the liquid level height by using the function FxB, and outputs the calculated valve opening degree to the selector 27. The selector 26 selects the valve opening degree having a smaller value between the valve opening degree based on the flow rate acquired from the controller 21 and the valve opening degree based on the liquid level height acquired from the controller 24b (function FxA), outputs the selected valve opening degree to the lean valve 9 as a specified value, and controls the opening degree of the lean valve 9. The selector 27 selects the valve opening degree having a larger value between the valve opening degree based on the flow rate acquired from the controller 22 and the valve opening degree based on the liquid level height acquired from the controller 24b (function FxB), outputs the selected valve opening degree to the bypass valve 8 as a specified value, and controls the opening degree of the bypass valve 8.

### (Operation)

For example, when the operation of the fourth embodiment is described with reference to Fig. 3, first, the rich liquid flow rate setting value is increased compared to before (step S1). The controller 21 controls the opening degree of the rich valve 5 based on the increased rich liquid flow rate setting value and the measured value of the flow meter C1. Next, the lean liquid flow rate setting value is increased compared to before (step S2). The selector 26 selects the valve opening degree having a smaller opening degree out of the valve opening degree calculated based on the increased lean liquid flow rate setting value and the measured value of the flow meter C3 and the valve opening degree for correcting the liquid level height calculated by the function FxA, and opens the lean valve 9 at the selected valve opening degree. Next, the flow rate setting value of the bypass line L3 is decreased compared to before (step S3). The selector 27 selects the valve opening degree having a larger opening degree out of the valve opening degree calculated based on the decreased flow rate setting value and the measured value of the flow meter C2 and the valve opening degree for correcting the liquid level height calculated by the function FxB, and opens the bypass valve 8 at the selected valve opening degree. Next, the controller 20 determines whether or not the flow rate of the rich liquid has reached the final target value (step S4). In a case where the flow rate of the rich liquid has reached the final target value (step S4; Yes), the switching process to the circulation operation at normal times is completed. In a case where the flow rate of the rich liquid has not reached the final target value (step S4; No), the processes from step S1 are repeatedly executed.

### (Effects)

According to the fourth embodiment, as in the first embodiment, it is possible to switch to the circulation operation at normal times while maintaining the balance of the absorption liquid flowing into and out of the regenerator 2. Further, even in a case where the balance of the inflow and outflow cannot be achieved by the control of the first embodiment and the liquid level fluctuation occurs, it is possible to switch to the circulation operation at normal times while maintaining the liquid level height of the regenerator 2 by the valve opening degree control based on the liquid level height.

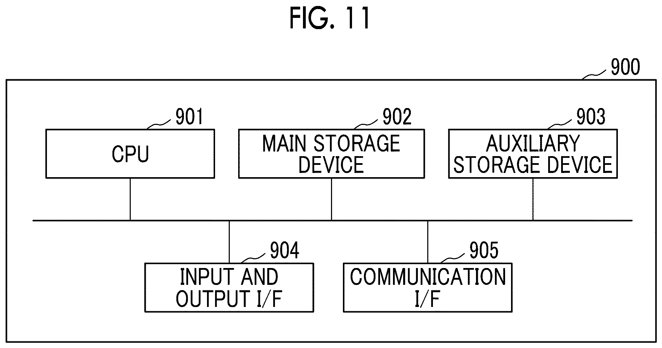

Fig. 11 is a diagram showing an example of a hardware configuration of the controller according to each embodiment. A computer 900 includes a CPU 901, a main storage device 902, an auxiliary storage device 903, an input and output interface 904, and a communication interface 905. The above-described controllers 20, 21, 22, 23, 23b, 24, and 24b, the adder 25, and the selectors 26 and 27 are mounted on the computer 900. Then, each of the functions described above is stored in the auxiliary storage device 903 in a form of a program. The CPU 901 reads out the program from the auxiliary storage device 903, expands the program to the main storage device 902, and executes the process according to the program. The CPU 901 secures a storage area in the main storage device 902 according to the program. The CPU 901 secures a storage area for storing data being processed in the auxiliary storage device 903 according to the program.

A program for realizing all or some of the functions of the controllers 20, 21, 22, 23, 23b, 24, and 24b, the adder 25, and the selectors 26 and 27 may be recorded on a computer-readable recording medium, and the program recorded on the recording medium may be read by a computer system and executed to perform processes by each functional unit. The "computer system" described herein includes hardware such as an OS and peripheral devices. The "computer system" also includes a homepage providing environment (or display environment) in a case where a WWW system is used. The "computer-readable recording medium" refers to a portable medium such as a CD, a DVD, or a USB, or a storage device such as a hard disk built into the computer system. In a case where the program is distributed to the computer 900 by a communication line, the computer 900 that receives the distribution of the program may expand the program to the main storage device 902 and execute the process described above. The program described above may be a program for realizing some of the above-described functions, or further may be a program for realizing the above-described functions in combination with a program already recorded in the computer system.

In another embodiment, the controllers 20, 21, 22, 23, 23b, 24, and 24b, the adder 25, and the selectors 26 and 27 may include a custom large scale integrated circuit (LSI) such as a programmable logic device (PLD) in addition to or instead of the above configuration. Examples of the PLD include a programmable array logic (PAL), a generic array logic (GAL), a complex programmable logic device (CPLD), and a field programmable gate array (FPGA). In this case, some or all of the functions realized by the processor may be realized by the integrated circuit.

As described above, although some embodiments according to the present disclosure have been described, all of these embodiments are presented merely as examples and are not intended to limit the scope of the inventions. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention. For example, in each of the above-described embodiments, the control at the time of switching from the operation of circulating the absorption liquid through each of the absorber 1 and the regenerator 2 to the circulation operation at normal times is described. However, the present disclosure is not limited thereto, and the present disclosure can also be applied when the circulation operation at normal times is started. The controllers 20, 21, 22, 23, 23b, 24, and 24b, the adder 25, and the selectors 26 and 27 are examples of the control device.

### <Additional Notes>

The CO₂ capture unit and the control method described in each embodiment are understood as follows, for example.
(1) A CO₂ capture unit according to a first aspect includes: a regenerator 2; an absorber 1; a rich line L1 for supplying an absorption liquid from the absorber 1 to the regenerator 2; a first flow meter C1 provided in the rich line L1; a rich valve 5 that controls a flow rate of the absorption liquid flowing through the rich line; a lean line L2 for supplying the absorption liquid from the regenerator 2 to the absorber 1; a second flow meter C3 provided in the lean line L2; a lean valve 9 that controls a flow rate of the absorption liquid flowing through the lean line L2; a bypass line L3 for returning the absorption liquid flowing through the lean line L2 to the regenerator 2; a bypass valve 8 that controls a flow rate of the absorption liquid returning through the bypass line; and a control device (controllers 20, 21, 22, 23, 23b, 24, and 24b, an adder 25, and selectors 26 and 27) that controls opening degrees of the rich valve 5, the lean valve 9, and the bypass valve 8 such that a liquid level height of the absorption liquid stored in the regenerator 2 becomes a predetermined target value when an operation of circulating the absorption liquid between the absorber 1 and the regenerator 2 through the rich line L1 and the lean line L2 is started.
   In this manner, the liquid level fluctuation in the regenerator 2 can be suppressed, and the circulation operation at normal times can be started.
(2) The CO₂ capture unit according to a second aspect is the CO₂ capture unit of (1), further including a third flow meter provided in the bypass line, in which the control device increases the opening degrees of the rich valve and the lean valve such that both the flow rate of the absorption liquid flowing through the rich line and the flow rate of the absorption liquid flowing through the lean line are increased by a predetermined change width, and decreases the opening degree of the bypass valve such that the flow rate of the absorption liquid returning through the bypass line is decreased by the change width.
   Since the circulation operation at normal times can be started by performing the flow rate control to achieve the balance of the absorption liquid flowing into and out of the regenerator 2, the liquid level fluctuation can be suppressed (first embodiment).
(3) A CO₂ capture unit according to a third aspect is the CO₂ capture unit of (2), in which the control device calculates a correction amount of a flow rate such that a deviation between the liquid level height of the absorption liquid stored in the regenerator and the target value is 0, and controls the opening degree of the rich valve or the lean valve based on a value obtained by adding the correction amount to a flow rate by which the flow rate is increased by the change width.
   By controlling the liquid level fluctuation of the regenerator 2 with feedback, the liquid level fluctuation can be suppressed, and the circulation operation at normal times can be started (second embodiment).
(4) The CO₂ capture unit according to a fourth aspect is the CO₂ capture unit of (1), in which the control device calculates a first flow rate of the absorption liquid flowing through the lean line and a second flow rate of the absorption liquid returning through the bypass line such that the flow rate of the absorption liquid flowing through the rich line is increased and a deviation between the liquid level height of the absorption liquid stored in the regenerator and the target value is 0, controls the opening degree of the lean valve based on the first flow rate, and controls the opening degree of the bypass valve based on the second flow rate.
   By controlling the liquid level fluctuation of the regenerator 2 with feedback, the liquid level fluctuation can be suppressed, and the circulation operation at normal times can be started (third embodiment).
(5) The CO₂ capture unit according to a fifth aspect is the CO₂ capture unit of (1), further including: a third flow meter provided in the bypass line, in which the control device calculates a first opening degree of the rich valve and a second opening degree of the lean valve such that both the flow rate of the absorption liquid flowing through the rich line and the flow rate of the absorption liquid flowing through the lean line are increased by a predetermined change width, calculates a third opening degree of the bypass valve such that the flow rate of the absorption liquid returning through the bypass line is decreased by the change width, calculates a first flow rate of the absorption liquid flowing through the lean line and a second flow rate of the absorption liquid returning through the bypass line such that a deviation between the liquid level height of the absorption liquid stored in the regenerator and the target value is 0, calculates a fourth opening degree of the lean valve based on the first flow rate, and calculates a fifth opening degree of the bypass valve based on the second flow rate, controls the rich valve with the first opening degree, controls the lean valve with a smaller opening degree out of the second opening degree and the fourth opening degree, and controls the bypass valve with a larger opening degree out of the third opening degree and the fifth opening degree.
   By performing the flow rate control to achieve the balance of the absorption liquid flowing into and out of the regenerator 2 and controlling the liquid level fluctuation of the regenerator 2 with feedback, the liquid level fluctuation can be suppressed (fourth embodiment).
(6) A control method according to a sixth aspect is a control method for a CO₂ capture unit including an absorber, a regenerator, a rich line for supplying an absorption liquid from the absorber to the regenerator, a first flow meter provided in the rich line, a rich valve that controls a flow rate of the absorption liquid flowing through the rich line, a lean line for supplying the absorption liquid from the regenerator to the absorber, a second flow meter provided in the lean line, a lean valve that controls a flow rate of the absorption liquid flowing through the lean line, a bypass line for returning the absorption liquid flowing through the lean line to the regenerator, and a bypass valve that controls a flow rate of the absorption liquid returning through the bypass line, the method including: controlling opening degrees of the rich valve, the lean valve, and the bypass valve such that a liquid level height of the absorption liquid stored in the regenerator becomes a predetermined target value when an operation of circulating the absorption liquid between the absorber and the regenerator through the rich line and the lean line is started.

### Industrial Applicability

According to the CO₂ capture unit and the control method described above, in the CO₂ capture unit, when the operation of circulating the absorption liquid between the absorber and the regenerator is started, the liquid level fluctuation in the regenerator can be suppressed.

### Reference Signs List

1: absorber
2: regenerator
3: pump
4: rich tank
5: rich valve
6: absorption liquid heat exchanger
7: pump
6: absorption liquid heat exchanger
8: bypass valve
9: lean valve
10: lean tank
11: valve
20, 21, 22, 23, 23b, 24, 24b: controller
25: adder
26, 27: selector
C1, C2, C3: flow meter
L1: rich line
L2: lean line
L4: line
100, 100a, 100b, 100c: CO₂ capture unit
900: computer
901: CPU
902: main storage device
903: auxiliary storage device
904: input and output interface
905: communication interface

## Claims

1. A CO₂ capture unit comprising:
an absorber;
a regenerator;
a rich line for supplying an absorption liquid from the absorber to the regenerator;
a first flow meter provided in the rich line;
a rich valve that controls a flow rate of the absorption liquid flowing through the rich line;
a lean line for supplying the absorption liquid from the regenerator to the absorber;
a second flow meter provided in the lean line;
a lean valve that controls a flow rate of the absorption liquid flowing through the lean line;
a bypass line for returning the absorption liquid flowing through the lean line to the regenerator;
a bypass valve that controls a flow rate of the absorption liquid returning through the bypass line; and
a control device that controls opening degrees of the rich valve, the lean valve, and the bypass valve such that a liquid level height of the absorption liquid stored in the regenerator becomes a predetermined target value when an operation of circulating the absorption liquid between the absorber and the regenerator through the rich line and the lean line is started.

2. The CO₂ capture unit according to Claim 1, further comprising:
a third flow meter provided in the bypass line, wherein
the control device
increases the opening degrees of the rich valve and the lean valve such that both the flow rate of the absorption liquid flowing through the rich line and the flow rate of the absorption liquid flowing through the lean line are increased by a predetermined change width, and
decreases the opening degree of the bypass valve such that the flow rate of the absorption liquid returning through the bypass line is decreased by the change width.

3. The CO₂ capture unit according to Claim 2, wherein
the control device calculates a correction amount of a flow rate such that a deviation between the liquid level height of the absorption liquid stored in the regenerator and the target value is 0, and controls the opening degree of the rich valve or the lean valve based on a value obtained by adding the correction amount to a flow rate by which the flow rate is increased by the change width.

4. The CO₂ capture unit according to Claim 1, wherein
the control device calculates a first flow rate of the absorption liquid flowing through the lean line and a second flow rate of the absorption liquid returning through the bypass line such that the flow rate of the absorption liquid flowing through the rich line is increased and a deviation between the liquid level height of the absorption liquid stored in the regenerator and the target value is 0, controls the opening degree of the lean valve based on the first flow rate, and controls the opening degree of the bypass valve based on the second flow rate.

5. The CO₂ capture unit according to Claim 1, further comprising:
a third flow meter provided in the bypass line, wherein
the control device
calculates a first opening degree of the rich valve and a second opening degree of the lean valve such that both the flow rate of the absorption liquid flowing through the rich line and the flow rate of the absorption liquid flowing through the lean line are increased by a predetermined change width,
calculates a third opening degree of the bypass valve such that the flow rate of the absorption liquid returning through the bypass line is decreased by the change width,
calculates a first flow rate of the absorption liquid flowing through the lean line and a second flow rate of the absorption liquid returning through the bypass line such that a deviation between the liquid level height of the absorption liquid stored in the regenerator and the target value is 0, calculates a fourth opening degree of the lean valve based on the first flow rate, and calculates a fifth opening degree of the bypass valve based on the second flow rate,
controls the rich valve with the first opening degree,
controls the lean valve with a smaller opening degree out of the second opening degree and the fourth opening degree, and
controls the bypass valve with a larger opening degree out of the third opening degree and the fifth opening degree.

6. A control method for a CO₂ capture unit including
an absorber,
a regenerator,
a rich line for supplying an absorption liquid from the absorber to the regenerator,
a first flow meter provided in the rich line,
a rich valve that controls a flow rate of the absorption liquid flowing through the rich line,
a lean line for supplying the absorption liquid from the regenerator to the absorber,
a second flow meter provided in the lean line,
a lean valve that controls a flow rate of the absorption liquid flowing through the lean line,
a bypass line for returning the absorption liquid flowing through the lean line to the regenerator, and
a bypass valve that controls a flow rate of the absorption liquid returning through the bypass line, the method comprising:
controlling opening degrees of the rich valve, the lean valve, and the bypass valve such that a liquid level height of the absorption liquid stored in the regenerator becomes a predetermined target value when an operation of circulating the absorption liquid between the absorber and the regenerator through the rich line and the lean line is started.
